# EUROPÄISCHE PATENTSCHRIFT

(11) **EP 0 451 723 B1**
(45) Veröffentlichungstag und Bekanntmachung des Hinweises auf die Patenterteilung: **27.07.1994**
(21) Anmeldenummer: 91105422.9
(22) Anmeldetag: 05.04.1991
(51) Int. Cl.: H02B 1/052

(54) **Schnellbefestigingsvorrichtung zum Aufschnappen eines Installationsgerätes auf eine Normprofiltragschiene**
Quick fixing device to snap an installation device onto a standard rail
Dispositif à fixation rapide par encliquetage d'appareil d'installation sur un rail profilé normalisé

(30) Priorität: 09.04.1990 DE 4011446
(43) Veröffentlichungstag der Anmeldung: 16.10.1991
(73) Patentinhaber: ABB PATENT GmbH, 68309 Mannheim (DE)
(72) Erfinder: Schmitt, Volker, W-6919 Bammental (DE); Muders, Erwin, W-6900 Heidelberg (DE); Goehle, Rolf, W-6906 Leimen (DE); Schmitt, Hermann, W-6803 Edingen (DE)
(74) Vertreter: Rupprecht, Klaus, Dipl.-Ing.

(56) Entgegenhaltungen:
- DE-U- 6 601 556
- DE-U- 8 626 971
- DE-U- 8 800 369

## Beschreibung

Die Erfindung betrifft eine Schnellbefestigungsvorrichtung für ein elektrisches Installationsgerät gemäß dem Oberbegriff des Anspruches 1.

Eine Schnellbefestigung oder eine Schnappbefestigung dient dazu, elektrische Installationsgeräte, insbesondere Leitungsschutzschalter auf einer Normprofiltragschiene aufzuschnappen. Die Normprofiltragschiene ist im allgemeinen als eine Hutprofilschiene ausgebildet und zum Aufschnappen wird die feste Nase am Installationsgerät hinter eine Kante der Hutprofilschiene eingehakt und die bewegliche Nase über die andere Kante der Hutprofilschiene gerastet.

Bei den bekannten, bis heute üblichen Schnappbefestigungen ist die Befestigungbewegung immer eine Drehbewegung um die Kante, hinter die die feste Nase eingehakt wird. Wenn dabei an einer Klemme, insbesondere an der Klemme, in deren Bereich sich der bewegbare Schieber befindet, eine mehrere nebeneinander auf der Hutprofilschiene aufgeschnappte Installationsgeräte verbindende Anschlußschiene oder ein Phasenschienenblock angeschlossen ist, dann muß, um ein Installationsgerät, insbesondere einen Leitungsschutzschalter, demontieren zu können, zunächst die Stromschiene oder der Phasenschienenblock entfernt werden. Dies hat eine Unterbrechung der Stromversorgung anderer Netze zur Folge, die über die gleiche Stromschiene oder den Phasenschienenblock mit Strom versorgt werden.

Aus der DE-OS 37 32 434 ist eine Schnappbefestigung mit einer Schieberanordnung bekannt geworden, die an einem Schiebeelement und einem darin geführten Schieber mit der beweglichen Nase gebildet ist; das Schiebeelement ist auf der Befestigungsseite eines Leitungsschutzschalters verschiebbar angebracht und in zwei Stellungen verrastbar. Das Schiebeelement ist so weit verschiebbar, daß das Installationsgerät auf der Hutprofiltragschiene in Richtung seiner Bodenebene oder Bodenfläche verschiebbar ist, so daß das Gehäuse frei von der Stromschiene ist. Dadurch ist es ohne weiteres möglich, ohne Behinderung durch die eingebaute Stromschiene das elektrische Installationsgerät senkrecht zur Normprofiltragschiene von dieser abzunehmen; eine Verdrehung um die sog. feste Nase und damit eine Demontierung der Stromschiene mit Abschaltung anderer an der gleichen Stromschiene angeschlossener Installationsgeräte ist nicht mehr erforderlich.

Ähnliche Lösungen sind beispielsweise auch aus der DE-GM 83 13 273 oder in einer etwas anderen Ausgestaltung aus der DE-OS 38 19 669 bekannt geworden.

Bei den bekannten Anordnungen besteht das Problem, das mehrere einzelne Teile erforderlich werden, die die Schnappverbindung und damit das elektrische Schaltgerät verteuern.

Aufgabe der Erfindung ist es, die Schnappverbindung oder Vorrichtung der eingangs genannten Art zu verbilligen.

Diese Aufgabe wird erfindungsgemäß gelöst durch die kennzeichnenden Merkmale des Anspruches 1.

In einer besonders vorteilhaften Ausgestaltung der Erfindung ist die Feder eine Schraubendruckfeder, deren eines Ende am Gehäuse und deren anderes Ende am Schieber festgelegt ist.

Dabei bestehen zwei Ausführungsmöglichkeiten: Bei der einen verläuft die Achse der Kraftrichtung in der Totpunktlage der Schraubendruckfeder im wesentlichen senkrecht zu der Bodenfläche oder zu der Ebene, die durch die Schieberbewegung gebildet wird, und bei der anderen Ausgestaltung verläuft die Kraftwirkung bzw. Kraftrichtung der Schraubendruckfeder genau parallel dazu.

Erfindungsgemäß werden lediglich zwei Bauteile erforderlich, und zwar zum einen der Schieber und zum anderen die Schraubendruckfeder.

In der ersten Stellung, in der die Nase federnd gegen die Kante der Hutprofilschiene gedrückt wird, verläuft die Kraftrichtung der Schraubendruckfeder unter einem Winkel zu der durch die Normprofiltragschiene aufgespannten Ebene, wobei die Kraftwirkung auf den Schieber eine Kraftkomponente in Richtung zur Normprofiltragschiene enthält; diese Kraftkomponente genügt, um den Leitungsschutzschalter fest an der Normprofiltragschiene zu verankern, gestattet aber auch, daß das Abnehmen des Installationsgerätes in üblicher Weise erfolgen kann. Bei der anderen Ausgestaltung, bei der die Kraftrichtung parallel zu der Ebene der Schieberbewegung und damit auch parallel zu der Ebene, die von der Normprofiltragschiene aufgespannt wird, verläuft, besitzt die Kraft der Schraubendruckfeder ebenfalls eine Kraftkomponente, die den Schieber in Richtung zur Normprofiltragschiene drückt.

Wenn der Schieber aus der ersten Stellung in die zweite Stellung verschoben werden soll, dann wird das eine, mit dem Schieber verbundene Ende der Schraubendruckfeder bezogen auf das andere, am Gehäuse angeschlossene Ende der Schraubendruckfeder verschoben, wobei eine Totpunktlage überschritten wird, in der sich die Fixierungsenden der Schraubendruckfeder genau gegenüberliegen: in der ersten Ausgestaltung verläuft die Verbindungslinie zwischen den Fixierstellen und damit die Kraftrichtung der Schraubendruckfeder etwa senkrecht zu der von der Normprofiltragschiene aufgespannten Ebene und in der anderen Ausgestaltung verläuft die Verbindungslinie der beiden Fixierungspunkte der Schraubendruckfeder parallel zur Kante der Normprofiltragschiene. Wenn die Totpunktlage überschritten ist, dann wird der Schieber durch die Kraft der Druckfeder automatisch in die Zweite Stellung gedrückt, deren Abstand von der ersten Stellung so bemessen ist, daß das Installationsgerät, also der Leitungsschutzschalter, parallel zu der von der Hutprofiltragschiene aufgespannten Ebene und senkrecht zur Hutprofiltragschiene verschiebbar ist, so daß ein evtl. in der dem Schieber benachbart liegenden Anschlußklemme eingesetzte Stromschiene vom Installationsgerät freikommt bzw. umgekehrt und dann das Installationsgerät senkrecht zur Normprofiltragschiene und senkrecht zu deren Ebene zur Demontage angehoben werden kann.

Die Montage kann in diesem Falle in umgekehrter Richtung erfolgen.

Anhand der Zeichnung, in der zwei Ausführungsbeispiele der Erfindung dargestellt sind, soll die Erfindung näher erläutert und beschrieben werden.

Es zeigen:
- Figur 1: eine schematische Darstellung einer ersten Ausführungsform der Erfindung, bei der Schieber sich in einer ersten Stellung befindet,
- Figur 2: die Vorrichtung nach Figur 1, mit dem Schieber in seiner zweiten Stellung,
- Figur 3: eine Schnittansicht gemäß der Schnittlinie III-III,
- Figur 4: eine Seitenansicht ähnlich der der Figur 1 einer zweiten Ausführungsform der Erfindung und
- Figur 5: eine Schnittansicht gemäß der Schnittlinie V-V der Figur 4.

Auf einer Normprofiltragschiene 10 ist ein Leitungsschutzschalter 11 aufgeschnappt. Dieser besitzt an seinem Boden, also an der Befestigungsseite, eine U-förmige Ausnehmung 12, an deren einem Ende eine feste Nase 13 und an deren anderem Ende eine bewegbare Nase 14 angebracht ist. Die bewegbare Nase 14 ist an einem Schieber 15 angeordnet bzw. angeformt, der einen rechteckigen ersten Bereich 16 und eine die Nase 14 bildende C-förmige Umbiegung 17 aufweist, wobei der eine Schenkel der Umbiegung 17 durch den Bereich 16 und der andere Schenkel durch einen Führungsabschnitt 18 gebildet ist, der im Vergleich zu dem Bereich 16 erheblich kürzer ausgebildet ist. Der Abschnitt 18 besitzt quer zur Verschieberichtung P zwei seitliche Laschen 19 und 20, die in Nuten 21 eingreifen und in denen der Abschnitt 18 am Gehäuse des Leitungsschutzschalters 11 geführt ist. Der Abschnitt 16 ist senkrecht zur Verschieberichtung P so breit ausgebildet wie die freien Seitenkanten der Laschen 19 und 20 voneinander entfernt sind, und demgemäß befinden sich die Seitenkanten des Bereiches 16 in weiteren Nuten 22 im Gehäuse, so daß der Schieber 15 sowohl in den Nuten 21 und 22 geführt ist.

Im Verschiebebereich des Schiebers 15 befindet sich am Gehäuse eine Anschlagfläche 23, die parallel zur Verschieberichtung des Schiebers 15 ausgerichtet ist und an der eine Nocke 24 angeformt ist, die ins Innere der Wicklung einer Schraubendruckfeder 25 eingreift und die Schraubendruckfeder 25 an der Anschlagfläche 23 am Gehäuse des Leitungsschutzschalters 11 mit einem Ende fixiert. An dem Bereich 16 befindet sich eine Ausnehmung 27, die einen Haken 26 umgibt, der senkrecht zum Bereich 16 ausgerichtet ist und von dem Bereich 16 hin zu der Anschlagfläche bzw. zu der Nocke 24 vorspringt. Dieser Haken 26 greift ins Innere des anderen Endes der Schraubendruckfeder 25 ein, so daß mit diesem Ende die Schraubendruckfeder an dem Schieber 15 fixiert ist.

Am der Nase 14 entgegengesetzten Ende des Bereiches 16 befindet sich eine Ausnehmung 28, durch die der Schieber mittels eines Werkzeuges entgegen der Pfeilrichtung P verschoben werden kann.

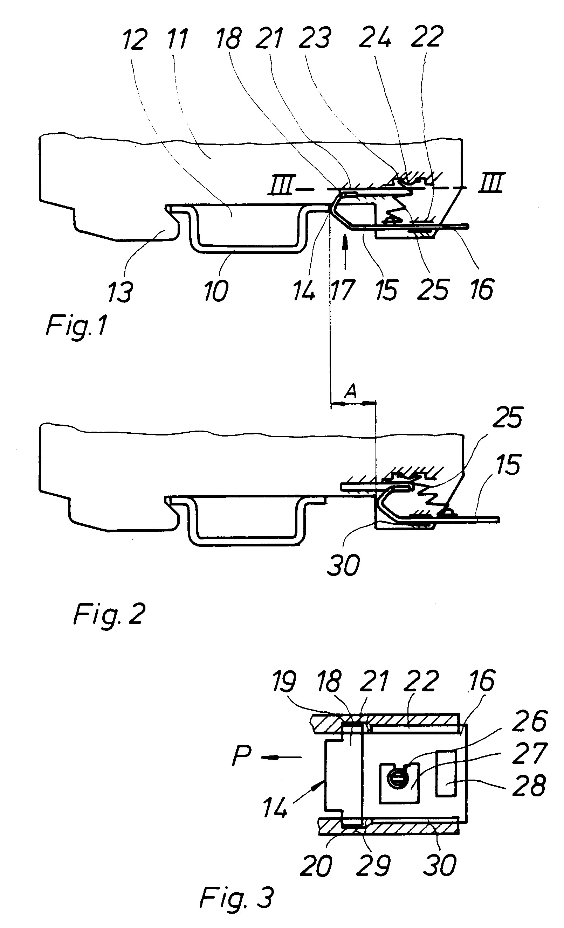

Man erkennt aus den Figuren 1 und 2, daß der Schieber um die Strecke A verschoben werden kann, und zwar so weit, bis sich die Nase hinter der anderen Begrenzungswand 30 der Ausnehmung 12 befindet. Dieser Abstand A entspricht der Breite einer nicht näher dargestellten Stromsammelschiene bzw. der Breite einer Schraubklemmenöffnung, dergestalt, daß in der in Figur 2 dargestellten zweiten Stellung der Leitungsschutzschalter 11 in Pfeilrichtung P verschoben werden kann, wobei der Boden der Ausnehmung 12 auf der Hutprofilschiene 10 verschoben werden kann bis die der Nase 14 benachbarte Kante der Hutprofilschiene 10 an der Begrenzungswand 30 der Ausnehmung 12 anliegt. Dadurch kommt der Leitungsschutzschalter 11 von der Stromsammelschiene frei und kann senkrecht zu der Hutprofiltragschiene 10 von dieser abgehoben werden.

Die Figur 1 zeigt den Schieber in der ersten Stellung, in der die Fixierungsstelle der Druckfeder 25 am Schieber 15 näher an der Hutprofilschiene 10 liegt als in der in Figur 2 dargestellten Stellung 2 des Schiebers; in dieser ersten Stellung drückt die Schraubendruckfeder 25 den Schieber gegen die Hutprofilschiene 10, und in der zweiten Stellung drückt die Schraubendruckfeder den Schieber 15 gegen einen Anschlag in der Nut 18. In einer in Figur 3 sichtbaren Totpunktlage der Feder verläuft die Schraubendruckfeder bzw. deren Kraftkomponente senkrecht zur Verschieberichtung und senkrecht zu der Ebene, die von der Hutprofilschiene aufgespannt wird zwischen der Nocke 24 und dem Haken 26. Die Schraubenfeder ist damit quasi eine Art Schnappfeder.

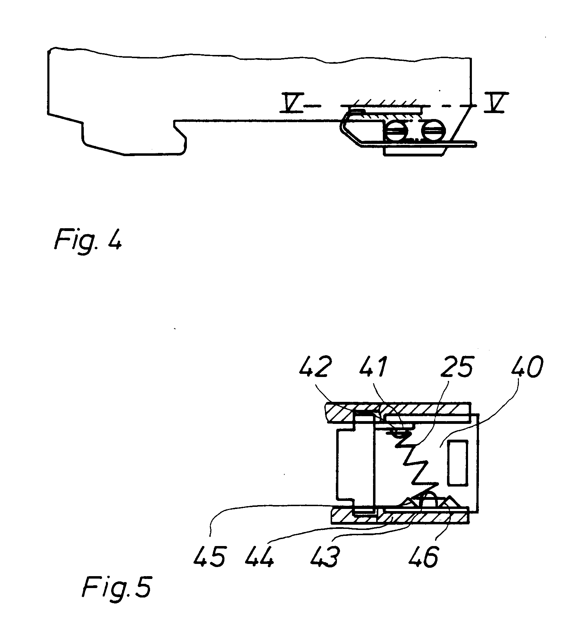

Die Figuren 4 und 5 zeigen eine weitere Ausgestaltung der Erfindung. Der Schieber 40 besitzt eine an seiner Führungskante, mit der er in der Nut 22 eingreift, eine Hochbiegung 41, an der eine Nocke 42 angeformt ist, die zur Fixierung eines Endes der Schraubendruckfeder 25 dient. Das andere Ende der Schraubendruckfeder ist um eine Nocke 43 am Gehäuse 44 herumgeschlungen, wobei zusätzlich noch Sicherungsvorsprünge 45 und 46 beidseitig zur Nocke 43 vorgesehen sind. Die Fläche, an der die Nocke 43 angeformt ist, verläuft senkrecht zu der durch den Schieber 15 aufgespannten Ebene.

Im übrigen verläuft die Schraubendruckfeder parallel zu der Ebene der Hutprofilschiene bzw. parallel zu der Längskante der Hutprofilschiene, gegen die die Nase 14 des Schiebers 15 angedrückt wird, und zwar in der Totpunktlage der Schraubendruckfeder 25, wenn sich die Nocken 42 und 43 gegenüberstehen.

In der ersten Stellung, die in den Figuren 4 und 5 dargestellt ist, drückt die Schraubendruckfeder 25 mit einer hin zu der Hutprofilschiene 10 gerichteten Kraftkomponente den Schieber in Pfeilrichtung P gegen die Hutprofilschiene; wenn der Schieber entgegen der Pfeilrichtung P aus dieser ersten Stellung in die zweite Stellung (ähnlich der in Figur 2 dargestellten Stellung) verschoben werden soll, dann bewegt sich die Nocke 42 an der Nocke 43 vorbei, zunächst bis sich die beiden Nocken gegenüberstehen und die Schraubendruckfeder in einer Totpunktlage ist; sobald die Nocke 42 die Nocke 43 passiert hat, drückt die Schraubendruckfeder 25 mit einer Kraftkomponente den Schieber 15 in die zweite Stellung, die der in Figur 2 dargestellten Stellung entspricht.

## Patentansprüche

1. Schnellbefestigungsvorrichtung zum Aufschnappen eines Installationsgerätes (11), insbesondere eines Leitungsschutzschalters, auf eine Normprofiltragschiene (10), insbesondere auf eine Hutprofiltragschiene, mit einer am Boden des Schaltgerätes vorgesehenen Ausnehmung (12), an deren einem Ende eine feste und an deren anderem Ende eine bewegbare Nase (14) vorgesehen ist, welche an einem federnd gegen die Hutprofilschiene (10) gedrückten Schieber (15) angeformt ist, wobei der Schieber (15) aus einer ersten Stellung, in der die bewegbare Nase gegen die Hutprofilschiene gedrückt ist, in eine zweite Stellung, in der die Nase (14) von der Hutprofilschiene (10) entfernt angeordnet ist, und zurück verschiebbar ist, dadurch gekennzeichnet, daß zwischen dem Schieber (15) und dem Gehäuse des Installationsgerätes (11) eine Feder (25) vorgesehen ist, die den Schieber in der ersten Stellung und in der zweiten Stellung festhält, wobei die Feder aus einer ersten stabilen Lage, in der sich der Schieber in seiner ersten Stellung befindet, über eine Totpunktlage in eine zweite stabile Lage bringbar ist, in der sich der Schieber in seiner zweiten Stellung befindet.

2. Schnellbefestigungsvorrichtung nach Anspruch 1, dadurch gekennzeichnet, daß die Feder (25) eine Schraubendruckfeder ist, deren eines Ende am Gehäuse und deren anderes Ende am Schieber (15) festgelegt ist.

3. Schnellbefestigungsvorrichtung nach Anspruch 2, dadurch gekennzeichnet, daß die Schraubendruckfeder (25) in der Totpunktlage etwa senkrecht zum Gehäuse und senkrecht zum Schieber zwischen Gehäuse und Schieber vorgesehen ist.

4. Schnellbefestigungsvorrichtung nach einem der Ansprüche 1 und 2, dadurch gekennzeichnet, daß die Schraubenachse parallel zu der Ebene verläuft, die durch die Verschiebung des Schiebers gebildet ist.

## Claims

1. Quick-release fastening device for snapping an installation apparatus (11), especially a line protection circuit breaker, on to a standard profiled mounting rail (10), especially on to a top-hat profiled mounting rail, having a recess (12) which is provided on the base of the switching apparatus and on one of whose ends a fixed tab (14) [sic] is provided, while a movable tab (14) is provided on its other end, which tab is integrally formed on a slide (15) which is pressed in a sprung manner against the top-hat profiled rail (10), it being possible to displace the slide (15) from a first position, in which the movable tab is pressed against the top-hat profiled mounting rail, into a second position, in which the tab (14) is arranged remote from the top-hat profiled mounting rail, and back, characterized in that a spring (25) is provided between the slide (15) and the housing of the installation apparatus (11), which spring (25) fixes the slide in the first position and in the second position, it being possible to move the spring, via a dead-centre position, from a first stable position, in which the slide is located in its first position, into a second stable position, in which the slide is located in its second position.

2. Quick-release fastening device according to Claim 1, characterized in that the spring (25) is a helical compression spring, one of whose ends is fixed on the housing and whose other end is fixed on the slide (15).

3. Quick-release fastening device according to Claim 2, characterized in that the helical compression spring (25) is provided with the dead-centre position approximately at right angles to the housing and at right angles to the slide, between the housing and the slide.

4. Quick-release fastening device according to one of Claims 1 and 2, characterized in that the helix axis runs parallel to the plane which is formed by the displacement of the slide.

## Revendications

1. Dispositif de fixation rapide pour l'encliquetage d'un appareil d'installation (11), en particulier d'un disjoncteur de protection de ligne, sur un rail de support (10) à profil normalisé, en particulier un rail de support à profil en oméga, l'appareil d'installation comprenant, sur son fond, une échancrure (12) comportant à une extrémité un nez fixe et à l'autre extrémité un nez mobile (14) qui est disposé sur un coulisseau (15) poussé élastiquement contre le rail (10) à profil en oméga, le coulisseau (15) pouvant être amené d'une première position dans laquelle le nez mobile est poussé contre le rail à profil en oméga, dans une deuxième position dans laquelle le nez (14) est éloigné du rail (10) à profil en oméga, et inversement, caractérisé par le fait qu'entre le coulisseau (15) et le boîtier de l'appareil d'installation (11), il est prévu un ressort (25) qui maintient le coulisseau dans la première position et dans la deuxième position, le ressort pouvant être amené d'une première position stable dans laquelle le coulisseau se trouve dans sa première position, en passant par une position de point mort, dans une deuxième position stable dans laquelle le coulisseau se trouve dans sa deuxième position.

2. Dispositif de fixation rapide suivant la revendication 1, caractérisé par le fait que le ressort (25) est un ressort hélicoïdal de compression dont une extrémité est fixée sur le boîtier et dont l'autre extrémité est fixée sur le coulisseau (15).

3. Dispositif de fixation rapide suivant la revendication 2, caractérisé par le fait que le ressort hélicoïdal de compression (25) est disposé, dans la position de point mort, à peu près perpendiculairement au boîtier et perpendiculairement au coulisseau, entre le boîtier et le coulisseau.

4. Dispositif de fixation rapide suivant l'une des revendications 1 et 2, caractérisé par le fait que l'axe du ressort hélicoïdal s'étend parallèlement au plan défini par le déplacement du coulisseau.
